# EUROPEAN PATENT SPECIFICATION

(11) **EP 1 270 765 B1**
(45) Date of publication and mention of the grant of the patent: **10.01.2007**
(21) Application number: 02020772.6
(22) Date of filing: 26.06.1998
(51) Int. Cl.: C25B 9/08

(54) **Membrane electrolyser**
Membranelektrolyseur
Electrolyseur à membrane

(30) Priority: 27.06.1997 US 884112; 27.06.1997 US 883665
(43) Date of publication of application: 02.01.2003
(62) Divisional of application: 98931597.3
(73) Proprietor: Lynntech, Inc., College Station, TX 77840 (US)
(72) Inventor: Andrews, Craig C., College Station, TX 77840 (US); Murphy, Oliver J., Bryan, TX 77802 (US)
(74) Representative: Lockey, Robert Alexander

(56) References cited:
- US-A- 4 343 690
- US-A- 5 466 354

## Description

### Description of Invention

**THE PRESENT INVENTION** relates to an electrolyser, and more particularly relates to an electrolyser in which, when the electrolyser is in operation, a first electrode compartment operates at a lower pressure than a second electrode compartment. This differential pressure may occur when the first electrode is an anode and the second electrode is a cathode.

According to this invention there is provided an electrolyser comprising an anode compartment comprising substantially incompressible components including an anode flowfield and a porous anodic electrocatalyst substrate held within a cell frame, a cathode compartment comprising at least one compressible cathode component, and a flexible membrane disposed between the anode and cathode compartments.

Preferably the anode compartment further comprises an anode product outlet in communication with an upper portion of the anode flowfield, the electrolyser further comprising an upwardly sloping passage in communication between the anode product outlet and a water reservoir.

Conveniently a bubble detector is disposed adjacent the upwardly sloping passage.

In one embodiment the cathode comprises a cathode flowfield and cathode product outlet communicating with an upper portion of the cathode product flowfield, there being an upwardly extending passage to provide communication between the cathode product outlet and a hydrogen storage vessel.

Preferably a bubble detector is provided adjacent the upwardly sloping passage providing communication between the cathode product outlet and the hydrogen storage vessel.

Conveniently there is a check valve in fluid communication between the cathode product outlet and the hydrogen storage vessel.

Preferably the anode flowfield is formed of flattened expanded metal and the cathode component is a cathode flowfield formed of non-flattened expanded metal.

Conveniently the porous anodic electrocatalyst substrate is moulded into the cell frame.

In order that the invention may be more readily understood, and so that further features thereof may be appreciated, the invention will now be described, by way of example, with reference to the accompanying drawings in which:

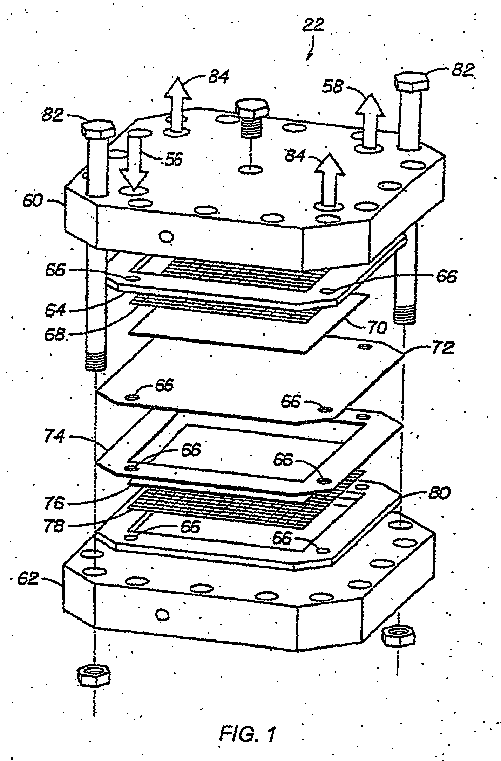

FIGURE 1 is an exploded view of a preferred electrolyser 22 in accordance with the present invention.

in the following description of the electrolyser 22, the materials of construction referred to as "preferred" are the materials actually used in a test device to prove that the invention would work for its intended purpose. In commercial production models of the present invention, where possible, less expensive materials may be used throughout, such as carbon steel replacing titanium where possible, and plastics, such as polypropylene, where heat and stress will permit the use of such materials.

The electrolyser 22 may be referred to herein as a proton exchange membrane (PEM) electrolyser. The proton exchange membrane 72 may itself prove corrosive in an environment in contact with certain substances, thus requiring the careful selection of the material of construction of the electrolyser. For example, the PEM 72 should only come in contact with carbon, graphite valve metals (such as titanium or tantalum), noble metals (such as platinum or palladium) or gold. However, those of skill in the art will readily recognise where less exotic materials than those listed in the following discussion that are located away from the PEM material Itself and the oxygen electrode catalyst can be readily employed without penalty. For example, graphite will be the material of choice in certain structural elements, and not some obvious candidates such as copper, aluminium or iron, which can corrode thus forming ions that can poison the anode and/or cathode electrocatalysts.

The electrolyser 22 includes an anodic electrocatalyst substrate and/or current collector 70 and a flattened "expanded" titanium flowfield 68 held within an anodic cell frame 66 made of polychlorotrifluoroethylene (PCTFE) sheet (such as KEL-F available from the 3M Company, St. Paul, Minnesota). The anode flowfield components may be moulded into the cell frame during mass production of the cell frames. The preferred anode substrate and/or current collector is a thin sheet of porous titanium made by sintering small diameter titanium spheres and is available from AstroMet, Cincinnati, Ohio. A more preferred anode substrate and/or current collector is a thin sheet of porous titanium made by sintering small diameter titanium fibres and is available from Porous Metal Products, Jacksboro. Texas.

The electrolyser 22 further includes a cathode substrate and/or current collector 76 and an expanded stainless steel flowfield 78 retained in a cathodic cell frame 80 formed of polysulfone. The preferred cathode substrate and/or current collector is a carbon paper consisting of pressed carbon fibres or a carbon cloth made from a weave having a cathodic electrocatalyst layer on one side containing polytetrafluoroethylene (PTFE)-bonded high surface area colloidal platinum or palladium, supported on carbon black or preferably an electrolessly deposited or electroplated thin film of platinum or palladium, most preferably having a platinum or palladium loading of at least 0.1 mg/cm². Alternatively, the cathode may be constructed using a semi-compressible stainless steel felt, suitably supported, having high porosity and sufficient catalytic activity.

The various components of the PEM electrolyser are stacked together and retained with a plurality of tie rods 82. preferably 16 such tie rods. Stainless steel tubes, such as SS316. are then screwed into four threaded ports oh one of the titanium end plates. The ports are the anode water inlet port 56, the anode water/oxygen outlet port 58, and a pair of cathode hydrogen/water outlet ports 84. To minimise electrical contact resistance between components, the titanium end plates 60 and 62 and the expanded titanium metal current collectors 68 and 78 may be electroplated with a thin film of gold or noble metals, such as platinum.

The anode water/oxygen outlet port 58 is associated with an upwardly sloping passage which is in communication between the anode product outlet port 58. and a water reservoir. There may be a bubble detector disposed adjacent to the upwardly sloping passage. The bubble detector is provided to sense the passage of gas bubbles. A suitable type of bubble detector is an optical transmission type detector. A signal from the bubble detector may be transmitted to a controller, and the signal may indicate that at least certain aspects of the electrolyser are operating properly. Conversely, if the signal indicates the absence of gas bubbles, then the electrolyser, may have a problem, such as a ruptured proton exchange membrane (PEM), depleted or blocked water supply etc. Furthermore, the controller receiving the signal from the bubble detector may analyse the number of gas bubbles passing through the passage over a period of time as some indication of the electrolyser's operating efficiency.

The cathode comprises a cathode flowfield having a cathode product outlet communicating with an upper portion of the cathode flowfield. In one embodiment, an upwardly sloping passage may be incorporated to provide communication between the cathode product outlet and a hydrogen storage vessel. A bubble detector may be disposed adjacent this upwardly sloping passage to detect the production of gases by the electrolyser. It is also preferred that the system include a check valve disposed in fluid communication between the cathode and the hydrogen storage vessel to prevent back-flow from the hydrogen storage vessel to the cathode.

By disposing the water reservoir which is in communication with the anode product outlet port 58 above the anode flowfield or manifold outlet, and by providing a flow-line that has a substantially continuous upward slope, the natural buoyancy of the gas bubble lifts water from the anode and causes a natural circulation of water into and out of the anode. This arrangement may eliminate the need for a water pump, yet may provide for water delivery and cooling of the anode and cathode.

The cathode and the anode of the electrolyser are of special construction. The cathodic electrode structure for hydrogen evolution may be fashioned from a commercially available fuel cell gas diffusion layer on a carbon cloth backing (such as ELAT available from E-TEK, Inc., Natick, Massachusetts), which acts as a support for the active hydrophilic electrocatalyst layer. This active layer contains high surface area colloidal platinum (about 100 m²/g), supported on carbon black (between about 10 and about 50 wt % Pt on C), yielding a platinum loading of at least about 0.1 mg/cm². The cathodic electrode structure may be hot-pressed on to one side of a segment of a precleaned PEM material. Hot-pressing of the cathodic electrode and. PEM is preferably carried out between the plates of a hot-press elevated to about 200° C for about 60 seconds, and using a force of about 66.7 kN (15,000 pounds).

One suitable anodic electrocatalyst layer contains mixed iridium and ruthenium dioxides at a molar ratio of about' 1:1. The layer is prepared by dissolving iridium and ruthenium chlorides in about 8 ml of concentrated HCL and heating the mixture to almost dryness. The resulting chlorides are then dissolved in isopropanol to make an ink-line coating. A porous titanium plate (such as a 0.05* thick plate available from Astro Met of Cincinnati, Ohio) is etched in 12% HBF₄ for about 60 seconds and rinsed with isopropanol.

This substrate is then coated with the ink-like mixture and the solvent evaporated under low heat of about 90°C. This coating and drying procedure is repeated several times, then the electrode is heated In a furnace at 400°C for 10 minutes in ambient air. The coating, drying and furnace treatment is repeated twice more, but with a final baking time of two hours instead of 10 minutes. A preferred anodic electrocatalyst consists of high surface area platinum-ruthenium metal alloy powder having an atomic ratio of 1:1 platinum-ruthenium and which is available from E-TEK, Inc., Natick, MA. A more preferred anodic electrocatalyst consists of high surface area platinum-ruthenium oxide (Pt-RuOₓ) electrocatalyst that employs anhydrous chloride salts of platinum and ruthenium. Quantities of the two salts are utilised such that the Pt-Ru atomic ratio is 1:1. The salts are ground together with NaNO₃ using a mortar and pestle until a homogenous powder is obtained. The resulting mixture is then deposited in a crucible, placed into a 500°C oven, and fired in an ambient atmosphere for 10 minutes. After heating, the crucible is removed from the oven and allowed to cool to room temperature. A shiny black crystalline solid is observed in the crucible which consists of the desired Pt-RuOₓ product dispersed in a salt matrix. To dissolve the salt and liberate the insoluble catalyst product from the matrix, the crucible is placed into a beaker of disfilled/deionised water for 24 hours. The product is then isolated using vacuum filtration, washed with copious amounts of deionised water, and dried in a heated vacuum oven.

To ensure that surface atoms of platinum and ruthenium in the Pt-RuOₓ crystallites are activated completely, the catalyst is subjected to a heated reduction step. The catalyst is placed into a cool ceramic heating tube which is housed in a muffle furnace and equipped for the external supply of gaseous reactant. Initially, argon is allowed to flow for one hour in the tube to remove potential oxidising species from the ceramic. Hydrogen is then introduced into the ceramic tube and the temperature of the fumace/ceramic tube is increased slowly to 200°C. This environment is maintained for six hours. The resulting catalyst is a very fine powder which displays catalytic activity toward methanol oxidation in the presence of air.

An even more preferred anodic electrocatalyst consists of a homogenous mixture of high surface area iridium and ruthenium oxides with either high surface area platinum-ruthenium metal alloy powder or high surface area Pt-RuOₓ. in each case, the mole ratio of indium and ruthenium oxides to platinum-ruthenium metal alloy or to Pt-RuOₓ should preferably be 1:1.

The anodic electrocatalysts described above are applied to one side of a proton exchange membrane in the form of a catalyst ink that is prepared using the following procedure. The catalyst is first dispersed into distilled water using a water to catalyst ratio of approximately 1: 1 by weight. The mixture is then sealed into an appropriate container to prevent solvent evaporation and agitated using high energy sonication for one hour or more until complete dispersion is achieved. Following dispersion and wetting of the catalyst, a quantity of commercially-available, dissolved ionomer solution, such as the 5 wt % Nafion_{®} solution available from Solution Technologies, Mendenhall, P A, is added to the dispersion such that the final concentration of ionomer is approximately 15 wt %. This mixture is resealed into a container to minimise evaporation and subjected to high energy sonication until a homogenous, well-dispersed catalyst ink is achieved. The ink is applied directly to the surface of a dry membrane as a single layer or as a multi-layer coating using a brush technique. For multi-layer coatings, the solvent of the previously applied layer is evaporated to dryness prior to the application of the next coat. The procedure could be modified to make use of other coating application techniques such as air spraying or spin coating which are more amenable to mass production.

After the catalyst ink has been applied successfully to one side of the membrane, the membrane and electrode (M&E) assembly is subjected to a hot press step. In this step, the electrodes and membranes are fused under elevated temperature and pressure in a hydraulic press equipped with resistively-heated platens. To press the M&E, a "press package" is created which consists of the M&E and various insulative and support layers to facilitate the release of the M&E from the package after the press step. In this package, the M&E assembly is sandwiched typically between two thin Teflon sheets to protect the electrode surface(s), and this sandwich is placed between two thin flat metal plates that provide support and heat transfer between the platens and the M&E during the press step. The complete M&E. Teflon, and metal plate press package is positioned quickly between the two pre-heated platens (ca. 150 to 200°C), and pressure 6.89 × 10⁶ to 10.33 × 10⁸ n/m² (1000 to 1500 psi) is applied to the package for 60 to 120 seconds to finish the M&E fabrication process.

For the longest component lifetime it is important to prevent the movement of internal electrolyser components as the cathode (hydrogen) pressure is changed. This is accomplished by selecting an anode flowfield and a porous electrocatalyst substrate that are non-compressible and selecting cathode components which provide sufficient elasticity such that the PEM is pressed firmly against the anode regardless of the cathode pressure.

In the preferred structure, the anode flowfield consists of flattened "expanded" metal and the cathode flowfield includes at least one piece of non-flattened (as expanded) metal to provide compression.

An alternative flowfield would be perforated corrugated steel. The corrugates could be designed to provide more rigidity on the low pressure side and more elasticity and resiliency on the high pressure side of the membrane.

It is envisaged that the moulding of the anode flowfield components into the call frame will Increase the rigidness of the non-compressible side and will simplify assembly.

When used in this Specification and Claims, the terms "comprises" and "comprising" and variations thereof mean that the specified features, steps or integers are included, but the terms are not to be interpreted to exclude the presence of other features, steps or components.

The features disclosed in the foregoing description, or the following Claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An electrolyser comprising an anode compartment comprising substantially incompressible components including an anode flowfield and a porous anodic electrocatalyst substrate held within a cell frame, a cathode compartment comprising at least one compressible cathode component, and a flexible membrane disposed between the anode and cathode compartments.

2. The electrolyser of Claim 1 wherein the anode compartment further comprises an anode product outlet in communication with an upper portion of the anode flowfield, the electrolyser further comprising an upwardly sloping passage in communication between the anode product outlet and a water reservoir.

3. The electrolyser of Claim 2 further comprising a bubble detector disposed adjacent the upwardly sloping passage.

4. The electrolyser of any one of the preceding Claims wherein the cathode compartment comprises a cathode flowfield and cathode product outlet communicating with an upper portion of the cathode product flowfield, there being an upwardly extending passage to provide communication between the cathode product outlet and a hydrogen storage vessel.

5. The electrolyser of Claim 4 wherein a bubble detector is provided adjacent the upwardly sloping passage providing communication between the cathode product outlet and the hydrogen storage vessel.

6. The electrolyser of Claim 4 or 5 wherein there is a check valve in fluid communication between the cathode product outlet and the hydrogen storage vessel.

7. The electrolyser of any one of Claims 1 to 6 wherein the anode flowfield is formed of flattened expanded metal and the cathode component has a cathode flowfield formed of non-flattened expanded metal.

8. The electrolyser of any one of Claims 1 to 6 wherein the porous anodic electrocatalyst substrate is moulded into the cell frame.

## Patentansprüche

1. Elektrolysegerät, das einen Anodenraum umfassend im wesentlichen nichtkomprimierbare Komponenten einschließend ein Anodenströmungsfeld und ein poröses, anodisches Elektrokatalyatorsubstrat, die in einem Zellrahmen gehalten werden, einen Kathodenraum umfassend wenigstens eine komprimierbare Kathodenkomponente, und eine flexible Membran, die zwischen den Anoden- und Kathodenräumen angeordnet ist, umfasst.

2. Elektrolysegerät nach Anspruch 1, wobei der Anodenraum ferner einen Anodenproduktauslaß in Verbindung mit einem oberen Bereich des Anodenströmungsfelds umfasst, wobei das Elektrolysegerät ferner eine nach oben geneigte Passage in Verbindung zwischen dem Anodenproduktauslaß und einem Wasserreservoir umfasst.

3. Elektrolysegerät nach Anspruch 2, weiter umfassend einen Blasendetektor, der benachbart zu der nach oben geneigten Passage angeordnet ist.

4. Elektrolysegerät nach einem der vorangehenden Ansprüche, wobei der Kathodenraum ein Kathodenströmungsfeld und einen Kathodenproduktauslaß in Verbindung mit einem oberen Bereich des Kathodenproduktströmungsfeldes umfasst, wobei es eine sich nach oben erstreckende Passage gibt, um eine Verbindung zwischen dem Kathodenproduktauslaß und einem Wasserstoffvorratsbehälter bereitzustellen.

5. Elektrolysegerät nach Anspruch 4, wobei ein Blasendetektor benachbart zu der nach oben geneigten Passage bereitgestellt ist, der eine Verbindung zwischen dem Kathodenproduktauslaß und dem Wasserstoffvorratsbehälter bereitstellt.

6. Elektrolysegerät nach Anspruch 4 oder 5, wobei es ein Kontrollventil in Fluidverbindung zwischen dem Kathodenproduktauslaß und dem Wasserstoffvorratsbehälter gibt.

7. Elektrolysegerät nach einem der Ansprüche 1 bis 6, wobei das Anodenströmungsfeld aus abgeflachtem, expandiertem Metall gebildet ist und die Kathodenkomponente ein Kathodenströmungsfeld aufweist, das aus nicht-abgeflachtem, expandiertem Metall gebildet ist.

8. Elektrolysegerät nach einem der Ansprüche 1 bis 6, wobei das poröse, anodische Elektrokatalysatorsubstrat im Zellrahmen eingeformt ist.

## Revendications

1. Un électrolyseur comprenant un compartiment à anodes comprenant des composants sensiblement incompressibles, incluant un champ d'écoulement d'anode et un substrat à électrolyseur anodique poreux, maintenu à l'intérieur d'un cadre de cellule, un compartiment à cathodes comprenant au moins un composant de cathode compressible, et une membrane flexible, disposée entre les compartiments à anodes et à cathodes.

2. L'électrolyseur selon la revendication 1, dans lequel le compartiment à anodes comprend en outre une sortie de produit d'anode, en communication avec une partie supérieure du champ d'écoulement d'anode, l'électrolyseur comprenant en outre un passage en pente vers le haut, en communication entre la sortie de produit d'anode et un réservoir d'eau.

3. L'électrolyseur selon la revendication 2, comprenant en outre un détecteur de bulles, disposé de façon adjacente au passage incliné vers le haut.

4. L'électrolyseur selon l'une quelconque des revendications précédentes, dans lequel le compartiment à cathodes comprend un champ d'écoulement de cathode et une sortie de produit de cathode, communiquant avec une partie supérieure du champ d'écoulement de produit de cathode, un passage, s'étendant vers le haut, étant prévu pour fournir une communication entre la sortie de produit de cathode et un récipient de stockage d'hydrogène.

5. L'électrolyseur selon la revendication 4, dans lequel un détecteur à bulles est prévu de façon adjacente au passage incliné vers le haut, fournissant une communication entre la sortie de produit de cathode et le récipient de stockage d'hydrogène.

6. L'électrolyseur selon la revendication 4 ou 5, dans lequel un clapet anti-retour est mis en communication fluidique, entre la sortie de produit de cathode et le récipient de stockage d'hydrogène.

7. L'électrolyseur selon l'une quelconque des revendications 1 à 6, dans lequel le champ d'écoulement d'anode est formé d'un métal expansé aplati, et le composant de cathode comprend un champ d'écoulement de cathode, formé d'un métal expansé non aplati.

8. L'électrolyseur selon l'une quelconque des revendications 1 à 6, dans lequel le substrat électro-catalytique anodique poreux est moulé dans le cadre de cellule.
